# EUROPÄISCHE PATENTSCHRIFT

(11) **EP 2 111 467 B1**
(45) Veröffentlichungstag und Bekanntmachung des Hinweises auf die Patenterteilung: **22.02.2017**
(21) Anmeldenummer: 07856697.3
(22) Anmeldetag: 13.12.2007
(51) Int. Cl.: C21C 5/00, C21C 5/28, C21C 5/46, C21C 5/44, C21C 5/52

(54) **VORRICHTUNG ZUM BETRIEB EINER WECHSELKONVERTER-ANLAGE EINES BLASSTAHLWERKS**
DEVICE FOR OPERATING A CHANGE CONVERTER UNIT OF AN OXYGEN STEEL-MAKING PLANT
DISPOSITIF D'EXPLOITATION D'UN SYSTÈME DE CONVERTISSEUR INTERCHANGEABLE D'UNE ACIÉRIE À L'OXYGÈNE

(30) Priorität: 20.01.2007 DE 102007003029
(43) Veröffentlichungstag der Anmeldung: 28.10.2009
(73) Patentinhaber: SMS group GmbH, 40237 Düsseldorf (DE)
(72) Erfinder: SCHÖCK, Hans-Wilhelm, 47239 Duisburg (DE); KLEINSCHMIDT, Guido, 47447 Moers (DE); MEIER, Lars, 47239 Duisburg (DE)
(74) Vertreter: Klüppel, Walter
(86) Internationale Anmeldenummer: PCT/EP2007/010952
(87) Internationale Veröffentlichungsnummer: WO 2008/086869

(56) Entgegenhaltungen:
- GB-A- 979 786
- JP-A- H0 350 494
- JP-A- H05 179 329
- US-A- 3 411 764
- US-A- 3 469 832
- US-A- 3 718 265
- US-A- 4 254 711
- HANS GRUNER: "Einjahrige Erfarung mit Wechselkonvertern bei der Mannesmannröhren-Werke AS im Hüttenwerk Huckingen"" STAHL UND EISEN, Bd. 104, Nr. 19, 1984, Seiten 969-976, XP002474557 in der Anmeldung erwähnt

## Beschreibung

Die Erfindung betrifft ein Verfahren zum Betrieb einer Wechselkonverter-Anlage eines Blasstahlwerks, wobei wechselweise der durch Verschleiß des Feuerfest-Materials unbrauchbar gewordene Konverter zur Reparatur aus dem Blasstand entfernt und ein mit Feuerfest-Material neu zugestellter Konverter im Austausch in den Blasstand eingebracht wird.

Konverter für die Stahlerzeugung besitzen eine feuerfeste Ausmauerung, die durch die beim Blasvorgang erzeugten hohen Temperaturen sowie durch die Stahl- und Schlackenschmelze einem hohen Verschleiß ausgesetzt sind. Es ist deshalb erforderlich, diese feuerfeste Ausmauerung in Zeitabständen zu erneuern. Hierzu wird der verschlissene Konverter aus dem Blasstand entfernt und in einem Zustellstand entsprechend repariert. Während dieser Zeit wird die Stahlerzeugung mit einem zweiten Konverter mit einwandfreier feuerfester Ausmauerung fortgesetzt.

Zur Durchführung dieses Austausches eines verschlissenen Konverters gegen einen einsatzfähigen Konverter in einer Wechselkonverter-Anlage sind unterschiedliche Konzepte bekannt. So wird in einem Aufsatz: "Einjährige Erfahrung mit Wechselkonvertern bei Mannesmannröhren-Werke AG im Hüttenwerk Huckingen" Stahl u. Eisen 104 (1984) Nr. 19 Seiten 969 - 976 eine Wechselkonverter-Anlage beschrieben, bestehend aus zwei Blasständen mit festeingebauten Tragringen, drei einwechselbaren Konvertergefäßen, einem Wechselwagen, einem Ausbrech- und Zustellstand und einem Abstellstand. Der Ablauf des Wechselvorgangs, der jeweils an einem der beiden Blasstände bei Verschleiß des Konvertergefäßes erforderlich wird, wird wie folgt durchgeführt:
Der Wechselwagen fährt unter den Blasstand des zu wechselnden Konverters. Eine Hebebühne auf dem Wechselwagen übernimmt das Konvertergefäß und
senkt es nach dem Lösen der Spannelemente aus dem Tragring ab. Nun fährt der Wechselwagen das Konvertergefäß zum freien Ausbrech- und Zustellstand und setzt es dort mit seiner Hebebühne auf Kragbalken ab. Anschließend fährt der Wechselwagen zum Abstellplatz, übernimmt dort das hier zwischengelagerte und auf seinen Einsatz wartende neu zugestellte Konvertergefäß und transportiert es zum freien Blasstand, wo es mit der Hebebühne in den Tragring gehoben wird. Vorausgesetzt, dass die Wechselvorgänge zügig durchgeführt werden, ist damit die gleiche Kapazität für den Schmelzbereich eingerichtet wie bei einem konventionellen Stahlwerk mit drei Konvertern.

Aus der österreichischen Patentschrift AT 406 383 B ist eine Wechselkonverter-Anlage bekannt, bestehend aus einem Blasstand, mindestens zwei Aufnahmeständen sowie einem zwischen dem Blasstand und den Aufnahmeständen verfahrbaren Transportmittel für den Konverter, wobei mindestens ein Aufnahmestand quer zur Fahrtrichtung des Transportmittels verfahrbar ausgebildet ist. Die Aufnahmestände sind als Abstellstände und gleichzeitig auch als Ausmauerungsstände ausgerüstet. Der Wechselvorgang wird bei dieser bekannten Wechselkonverter-Anlage wie folgt durchgeführt:
Zunächst wird das mit einer Hubvorrichtung und einer Tragevorrichtung für den Konverter ausgebildete Transportmittel in den Blasstand unterhalb des verschlissenen Konverters gefahren und dieser mit der Hubvorrichtung aus dem Tragring herausgedrückt. Danach wird der Konverter zu einem Aufnahmestand transportiert und dort zur Reparatur abgesetzt. Nun wird ein mit einem zugestellten einsatzfähigen Konverter bestückter Aufnahmestand, der dann als Abstellstand fungiert, im rechten Winkel zur Fahrtrichtung des Transportmittels soweit verfahren, dass das leere Transportmittel den reparierten Konverter aufnehmen, zum Blasstand transportieren und dort in den Tragring einsetzen kann.

Ferner werden in dem Prospekt H2/305E 1000/06/03 Ky der Firma SMS DE-MAG AG "Process lines for stainless steel production" Wechselkonverter-Anlagen mit AOD Konvertern in Edelstahlwerken beschrieben, bei denen zum Austausch nach Lösen vorhandener Befestigungen und Medienzuleitungen das Konvertergefäß mit Hilfe eines Krans aus dem geschlossen Tragring herausgehoben und auf einen Wechselwagen abgesetzt wird. Alternativ ist der Tragring U-förmig ausgebildet, aus dem dann das Konvertergefäß zunächst mit einem Wechselwagen mit Hubvorrichtung heraus geschoben wird.

US3469832, US3411764 und GB979786 offenbaren weiterhin der Einsatz von Konverterwagen , die zwischen Arbeits- und Wartungsstellen selbstverfahrend sind. Bei den genannten Verfahrensvarianten ist als nachteilig anzusehen, dass in allen Verfahren zunächst die Verbindung zwischen dem Konvertergefäß und dem Tragring gelöst werden muss und dann entweder ein aufwändiger mit einer Hubvorrichtung ausgerüsteter Wechselwagen eingesetzt werden muss oder bei Wechsel von AOD Konvertern in Edelstahlwerken die Krankapazität die Durchführbarkeit limitiert bzw. einschränkt.

Ausgehend vom geschilderten Stand der Technik ist es Aufgabe der Erfindung, ein Verfahren anzugeben, mit denen ein Produktionsausfall durch die Neuzustellung bzw. durch den Konverterwechsel auf ein Minimum reduziert wird und die unabhängig hiervon keinerlei Beschränkungen durch vorhandene oder neu zu installierende Krankapazitäten unterliegen.

Die gestellte Aufgabe wird beim Betrieb einer Wechselkonverter-Anlage eines Blasstahlwerks der eingangs genannten Art verfahrensmäßig mit den Merkmalen des Anspruchs 1 dadurch gelöst, dass beim Austauschvorgang der verschlissene Konverter einschließlich des gesamten Konverterkomplettaggregats, bestehend neben dem Konverter aus Konverterwagen, Tragring, Kippantrieb, Bodenspülvorrichtung und einer eventuell vorhandenen Tragringkühlvorrichtung, aus dem Blasstand heraus zur Reparatur in einen freien Zustell- und Wartestand gefahren und gleichzeitig ein anderes baugleiches Konverterkomplettaggregat, das einen reparierten einsatzfähigen Konverter enthält, aus einem weiteren Zustell- und Wartestand heraus in den Blasstand gefahren wird.

Durch das Merkmal der Erfindung, nicht nur das verschlissene Konvertergefäß bei einem notwendigen Austausch auszuwechseln, sondern gleich das gesamte Konverterkomplettaggregat, wozu das Konverterkomplettaggregat fahrbar ausgebildet ist, lässt sich der erforderliche Austausch in einem Minimum an Zeitaufwand durchführen, da eine einzelne Entfernung des Konvertergefäßes aus dem Konverterkomplettaggregat und die hierzu notwendigen Arbeiten entfallen und auch ein Transport des Konvertergefäßes mit einem Wechselwagen oder mit einem Kran eingespart wird. Gegenüber einem herkömmlichen Stahlwerk mit einer klassischen 1 von 2 Fahrweise (1 Konverter in Betrieb - 1 Konverter stand by) verringern sich dabei die Investitionskosten um ca. 50 %.

Erfindungsgemäß ist der Blasstand sowie eine zentrale Energie- und Medienstation zwischen zwei Zustell- und Warteständen angeordnet, die untereinander und damit auch mit dem Blasstand über eine Konverterwagen-Fahrbahn verbunden sind. Über diese Konverterwagen-Fahrbahn wird der erforderliche Austausch der Konverterkompiettaggregate mit Hilfe der integrierten Konverterwagen durchgeführt. Da der Blasstand zwischen den beiden Zustell- und Warteständen angeordnet ist, lässt sich dieser Austausch fast zeitgleich durchführen, denn während der verschlissene Konverter mit seinem Komplettaggregat vom Blasstand entfernt wird, kann von der anderen Seite bereits ein neuer Konverter herangeführt werden.

In den beiden Zustell- und Warteständen, in denen die verschlissenen Konverter neu zugestellt und die dann wieder einsatzfähigen Konverterkomplettaggregate in einer Warteposition stehen, sind jeweils Vorheizeinrichtungen angeordnet, die ein schnelles Trocknen der neuen Feuerfestzustellung und weiterhin ein Aufheizen des Konverters vor seinem folgenden Einsatz im Blasstand erlaubt.

Zum Betrieb des Konverters im Blasstand ist das Konverterkomplettaggregat über entsprechende Leitungen mit der von beiden Konvertern gemeinsam genutzten zentralen Energie- und Medienstation verbunden. Bei der Durchführung des Austauschvorgangs ist es deshalb erforderlich, das den verschlissenen Konverter enthaltende Konverterkomplettaggregat von dieser zentralen Energie- und Medienstation abzutrennen und nach erfolgtem Austausch das Konverterkomplettaggregat mit dem neuen Konverter an diese zentrale Energie- und Medienstation zum fortlaufenden Betrieb wieder anzuschließen.

Damit nach der Abtrennung von der zentralen Energie- und Medienstation das Konverterkomplettaggregat transportiert werden kann, sind nach einer vorteilhaften Ausgestaltung der Erfindung die Konverterwagen mit einem eigenen Antrieb ausgerüstet, wobei zur Energieversorgung des Antriebs ein selbstfahrender Energiezuführungswagen über die Konverterwagen-Fahrbahn an den Konverterwagen herangeführt und dort angekuppelt wird. Nach erfolgtem Transport der Konverterkomplettaggregate zu ihrem Bestimmungsort (Blasstand bzw. Zustell- und Wartestand) wird der Energiezuführungswagen wieder vom Konverterwagen entfernt.

Je nach Anordnung der Konverter im Stahlwerk kann die Forderung bestehen, dass die vorhandenen logistischen Transportwege innerhalb des Stahlwerks nicht beeinträchtigt werden. Um dieser Forderung zu entsprechen, wird eine die vorhandenen logistischen Transportwege des Stahlwerks kreuzende Fahrbahnteilstrecke der ansonst ortsfesten Konverterwagen-Fahrbahn bei Bedarf eingesetzt oder durch eine spezielle Fahrbahn-Hubvorrichtung auf bzw. unter den Hüttenflur verfahren.

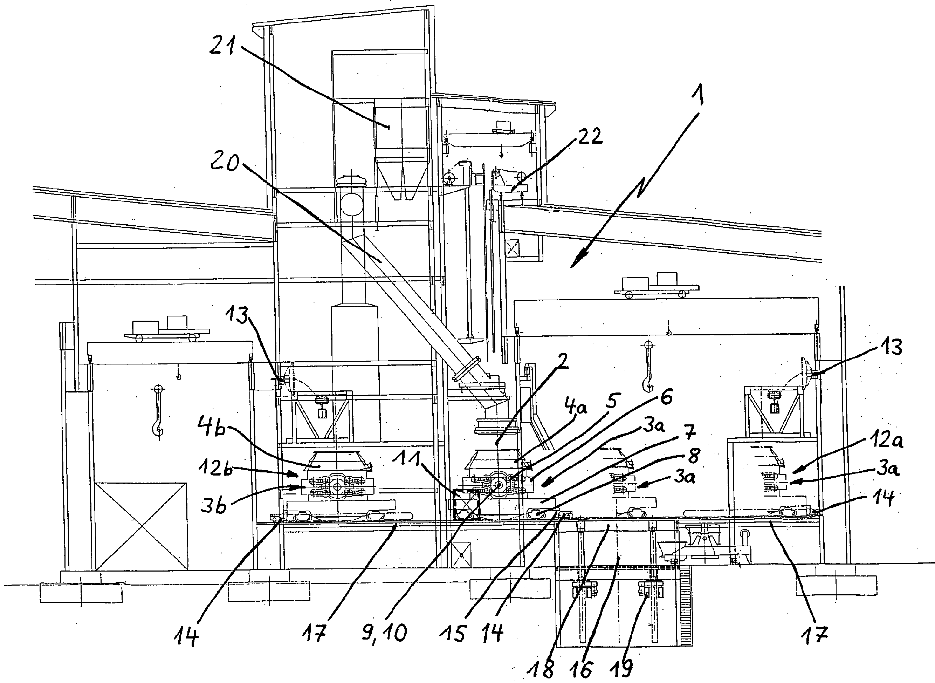

Weitere Einzelheiten, Merkmale und Vorteile der Erfindung werden an einem in einer schematischen Zeichnungsfigur dargestelltem Ausführungsbeispiel am Beispiel eines durchgeführten Austausches nachfolgend näher erläutert:
Das in der Zeichnung dargestellte Beispiel einer Wechselkonverter-Anlage 1 besteht im Wesentlichen aus einem Blasstand 2 mit Blaslanzenanlage 22, Materialhandlingsystem 21 und Entstaubungsanlage 20, die zwischen zwei Zustell- und Warteständen 12a, 12b angeordnet ist. Beide Zustell- und Wartestände 12a, 12b sind miteinander und mit dem Blasstand 2 durch eine Konverterwagen-Fahrbahn 17 verbunden, wobei eine Fahrbahnteilstrecke 18 aus Gründen der Stahlwerklogistik mit Hilfe einer Fahrbahn-Hubvorrichtung auf einen logistischen Transportweg 16 absenkbar ausgebildet ist.

Im Blasstand 2 befindet sich ein Konverterkomplettaggregat 3a, das ausgetauscht werden soll. Das Konverterkomplettaggregat 3a, das den verschlissenen Konverter 4a enthält, besteht darüber hinaus aus dem Kippantrieb 5, dem Tragring 6 mit einer Tragringkühlvorrichtung 10, dem Konverterwagen 7 mit Konverterwagen-Fahrantrieb 8 und einer Bodenspülvorrichtung 9.

Zum Austausch wird dieses Konverterkomplettaggregat 3a zunächst von der in der Nähe des Blasstandes 2 angeordneten zentralen Energie- und Medienversorgung 11 getrennt. Anschließend wird ein im jeweiligen, hier Zustell- und Wartestand 12a (in der Zeichnung rechts vom Blasstand 2) dort "geparkter" Energiezuführungswagen 14, der mit einem eigenen Antrieb versehen ist und auf der Konverterwagen-Fahrbahn 17 fährt, in die Ankoppelposition 15 des Konverterwagens 7 gefahren. Dort wird dann die Energieeinleitung für den Konverterwagen-Fahrantrieb 8 angekoppelt. Das Konverterkomplettaggregat 3a kann nun mit eigenen Antrieb 8 in den freien Zustell- und Wartestand 12a gefahren werden. In der Zeichnung ist der Fahrweg vom Blasstand 2 zum Zustell- und Wartestand durch einzelne "angedeutete" Positionen des Konverterkomplettaggregats 3a dargestellt. Im Zustell- und Wartestand 12a angekommen, kann der verschlissene Konverter 4a neu zugestellt und danach mit Hilfe der Vorheizvorrichtung 13 getrocknet und zum nächsten Einsatz vorgeheizt werden.

Zeitgleich zum Abtransport des Konverterkomplettaggregats 3a wird das auf seinen Einsatz im Zustell- und Wartestand 12b (in der Zeichnung links vom Blasstand 2) wartende Konverterkomplettaggregat 3b mit neu zugestellten Konverter 4b zum Blasstand 2 hin mit eigenem Antrieb gefahren, dort an die zentrale Energie- und Medienversorgung 11 angeschlossen und ist damit betriebsbereit.

### Bezugszeichenliste

- 1: Wechselkonverter-Anlage
- 2: Blasstand
- 3a: Konverterkomplettaggregat mit verschlissenem Konverter 4a
- 3b: Konverterkomplettaggregat mit neu zugestelltem Konverter 4b
- 4a: verschlissener Konverter
- 4b: neu zugestellter Konverter
- 5: Kippantrieb
- 6: Tragring
- 7: Konverterwagen
- 8: Konverterwagen-Fahrantrieb
- 9: Bodenspülvorrichtung
- 10: Tragringkühlvorrichtung
- 11: zentrale Energie- und Medienversorgung
- 12a, 12b: Zustell- und Wartestand
- 13: Vorheizvorrichtung
- 14: Energiezuführungswagen
- 15: Ankoppelposition
- 16: logistischer Transportweg
- 17: Konverterwagen-Fahrbahn (ortsfest)
- 18: Fahrbahnteilstrecke (absenk- bzw. einsetzbar)
- 19: Fahrbahn-Hubvorrichtung
- 20: Entstaubungsanlage
- 21: Materialhandlingsystem
- 22: Blaslanzenanlage

## Patentansprüche

1. Verfahren zum Betrieb einer Wechselkonverter-Anlage (1) eines Blasstahlwerks, wobei wechselweise der durch Verschleiß des Feuerfest-Materials unbrauchbar gewordene Konverter (4a) zur Reparatur aus dem Blasstand (2) entfernt und ein mit Feuerfest-Material neu zugestellter Konverter (4b) im Austausch in den Blasstand (2) eingebracht wird,
**dadurch gekennzeichnet,**
**dass** beim Austauschvorgang der verschlissene Konverter (4a) einschließlich des gesamten Konverterkomplettaggregats (3a), bestehend neben dem Konverter (4a) aus Konverterwagen (7), Tragring (6), Kippantrieb (5), Bodenspülvorrichtung (9) und einer eventuell vorhandenen Tragringkühlvorrichtung (10), aus dem Blasstand (2) heraus zur Reparatur in einen freien Zustell- und Wartestand (12a) gefahren und gleichzeitig ein anderes baugleiches Konverterkomplettaggregat (3b), das einen reparierten einsatzfähigen Konverter (4b) enthält, aus einem weiteren Zustell- und Wartestand (12b) heraus in den Blasstand (2) gefahren wird, wobei der Transport des Konverterkomplettaggregats (31, 3b) mittels des mit einem eigenen Antrieb (8) ausgebildeten integrierten Konverterwagens (7) auf der Konverterwagen-Fahrbahn (17) durchgeführt wird, wobei nach Abtrennung des Konverterkomplettaggregats (3a, 3b) von einer von beiden Konverterkomplettaggregaten (3a, 3b) gemeinsam genutzten zentralen Energie- und Medienstation (11) zur Energieversorgung des Transports ein selbstfahrender Energiezuführungswagen (14) über die Konverterwagen-Fahrbahn (17) an den Konverterwagen (7) herangeführt und dort angekoppelt wird.

2. Verfahren nach Anspruch 1,
**dadurch gekennzeichnet,**
**dass** im Zustell- und Wartestand (12a) der Konverter (4a) nach erfolgter Reparatur bis zu seinem erneuten Einsatz vorgeheizt wird.

3. Verfahren nach Anspruch 1 oder 2,
**dadurch gekennzeichnet,**
**dass** eine die vorhandenen logistischen Transportwege des Stahlwerks kreuzende Fahrbahnteilstrecke (18) der ansonsten ortsfesten Konverterwagen-Fahrbahn (17) bei Bedarf eingesetzt oder durch eine spezielle Fahrbahn-Hubvorrichtung (19) auf bzw. unter den Hüttenflur verfahren wird.

## Claims

1. Method of operating a changeover converter installation (1) of a converter-steel works, wherein in alternation the converter (4a) which has become unusable due to wear of the refractory material is removed from the converter stand (2) for repair and a converter (4b) refurbished with refractory material is introduced into converter stand (2) in exchange, **characterised in that**
in the exchange process the worn converter (4a) inclusive of the entire converter assembly (3a), consisting additionally to the converter (4a) of converter carriage (7), support ring (6), tilt drive (5), bottom purging device (9) and a possibly present support ring cooling device (10), is for repair moved out of the converter stand (2) into a free repair and waiting stand (12a) and at the same time another, constructionally identical converter assembly (3b) containing a repaired converter (4b) ready for use is moved out of a further repair and waiting stand (12b) into the converter stand (2), wherein the transport of the converter assembly (31, 3b) is carried out by means of the converter carriage (7), which is constructed to be integrated with an own drive (8), on the converter carriage track (17), wherein after separation of the converter assembly (3a, 3b) from a central energy and media station (11), which is used in common by both converter assemblies (3a, 3b), an automotive energy supply carriage (14) is, for supply of energy for the transport, led by way of the converter carriage track (17) up to the converter carriage (7) and coupled thereat to the carriage.

2. Method according to claim 1, **characterised in that** in the repair and waiting stand (12a) the converter (4a) is, after repair has been carried out, preheated until re-use thereof.

3. Method according to claim 1 or 2, **characterised in that** a track sub-section (18), which crosses the existing logistical transport paths of the steel works, of the otherwise stationary converter carriage track (17) is inserted when needed or is moved by a special track lifting device (19) onto or below the plant floor.

## Revendications

1. Procédé pour l'exploitation d'une installation de convertisseur interchangeable (1) d'une aciérie à oxygène, dans lequel, en alternance, on retire du poste de soufflage (2), à des fins de réparation, le convertisseur (4a) devenu inutilisable sur base de l'usure du matériau réfractaire, et on introduit par échange dans le poste de soufflage (2) un convertisseur (4b) regarni avec un nouveau matériau réfractaire, **caractérisé en ce que**, lors du processus d'échange, on fait passer depuis le poste de soufflage (2), le convertisseur usé (4a), notamment l'agrégat complet de convertisseur (3a) constitué, à côté du convertisseur (4a), par un chariot de convertisseur (7), un anneau de support (6), une commande de basculement (5), un dispositif de nettoyage du sol (9) et un dispositif de refroidissement (10) de l'anneau de support éventuellement présent, à des fins de réparation, jusque dans un poste libre de garnissage et d'entretien (12a) et, de manière simultanée, on fait passer, depuis un autre poste de garnissage et d'entretien (12b) jusque dans le poste de soufflage (2), un autre agrégat complet de convertisseur (3b) de structure analogue, qui contient un convertisseur opérationnel réparé (4b), dans lequel le transport de l'agrégat complet de convertisseur (31, 3b) est mis en oeuvre au moyen du chariot de convertisseur (7) intégré réalisé avec une commande propre (8) sur la voie de déplacement (17) du chariot de convertisseur, dans lequel, après séparation de l'agrégat complet de convertisseur (3a, 3b) par rapport à un poste central d'énergie et de milieux (11) utilisé de manière conjointe par les deux agrégats complets de convertisseurs (3a, 3b), à des fins d'alimentation du transport en énergie, un chariot d'alimentation d'énergie autopropulsé (14) est amené, via la voie de déplacement du chariot de convertisseur (17) au chariot de convertisseur (7) pour y être accouplé.

2. Procédé selon la revendication 1, **caractérisé en ce que** le convertisseur (4a) est soumis à un préchauffage dans le poste de garnissage et d'entretien (12a) une fois sa réparation effectuée, jusqu'à son exploitation renouvelée.

3. Procédé selon la revendication 1 ou 2, **caractérisé en ce que**, en cas de nécessité, on met en oeuvre un tronçon partiel de voie de déplacement (18), de la voie de déplacement (17) du chariot de convertisseur par ailleurs fixe, qui croise la voie de transport logistique présente dans l'aciérie ou on procède au déplacement via un dispositif spécifique (19) de levage de la voie de déplacement sur le sol, respectivement en dessous du sol de l'installation sidérurgique.
